(19) Europäisches Patentamt
European Patent Office
Office européen des brevets

(11) **EP 1 731 221 B1**

(12) **EUROPÄISCHE PATENTSCHRIFT**

(45) Veröffentlichungstag und Bekanntmachung des Hinweises auf die Patenterteilung:
**03.09.2008 Patentblatt 2008/36**

(51) Int Cl.:
*B01J 19/30* *(2006.01)* *F28F 25/08* *(2006.01)*

(21) Anmeldenummer: **05012322.3**

(22) Anmeldetag: **08.06.2005**

(54) **Füllkörper gebildet aus mindestens zwei flachen Einheiten**

Packing element built from at least two flat units

Elément de remplissage composé de au moins deux unités plates

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**13.12.2006 Patentblatt 2006/50**

(73) Patentinhaber: **Vereinigte Füllkörper-Fabriken GmbH & Co. KG**
**56235 Ransbach-Baumbach (DE)**

(72) Erfinder: **Schwämmlein, Kurt , Dr. Dipl.- Chem.**
**55545 Bad Kreuznach (DE)**

(74) Vertreter: **Quermann, Helmut et al**
**Quermann Sturm GbR**
**Patentanwälte**
**Unter den Eichen 7**
**65195 Wiesbaden (DE)**

(56) Entgegenhaltungen:
**EP-A- 0 882 501**      **WO-A-88/01197**
**WO-A-98/04343**      **US-A- 5 130 062**

**Beschreibung**

Die Erfindung betrifft einen Füllkörper, insbesondere für Stoff- und/oder Wärmeaustauschkolonnen, die von einer Gas- und/oder Flüssigkeitsströmung durchsetzt werden, gemäß den Merkmalen des Oberbegriffs des Patentanspruchs 1.

Es ist bekannt, dass Füllkörper verschiedener Ausführungsformen als regellose Schüttungen in Kolonnen, Reaktoren und anderen Behältern für den Stoff- und Wärmeaustausch vielfach eingesetzt werden, wobei thermische, chemische oder physikalische Verfahren wie Absorption, Desorption, Rektifikation, Extraktion und andere Trennprozesse betrieben werden, bei denen verschiedene Phasen bzw. Medien, zum Beispiel gasförmig/flüssig, mit möglichst geringem Aufwand effektiv und innig miteinander in Kontakt gebracht werden sollen. Die Füllkörper vergrößern die Oberfläche in dem von ihnen ausgefüllten Volumen und intensivieren dadurch den Stoff- bzw. Wärmeaustausch zwischen den verschiedenen Phasen bzw. Medien innerhalb dieses Volumens. Die Phasengrenzfläche für den Stoffübergang stimmt in der Regel nicht exakt mit der geometrischen Füllkörperoberfläche überein, sondern ist vielmehr die Summe aus der während des Prozesses benetzten Füllkörperoberfläche und der Oberflächensumme aller sich im Füllkörperbett bildenden Tropfen. Der Umfang der Benetzung der Füllkörperoberfläche hängt u.a. von den Flüssigkeitseigenschaften, den Füllkörpermaterialeigenschaften, der Berieselungsdichte und von weiteren Faktoren ab. Je größer die Phasengrenzfläche ist, desto größer ist - unter sonst gleichen Bedingungen - der Stoff- bzw. Wärmeaustausch. Das Füllkörperbett weist gegenüber der Strömung der Phasen einen bestimmten Druckverlust auf, der vom Gasbelastungsfaktor, der Berieselungsdichte, dem Füllkörpertyp, der Füllkörpergröße und weiteren Parametern abhängt. Wünschenswert ist ein möglichst hoher Stoff- bzw. Wärmeaustausch in einem möglichst kleinen Volumen unter möglichst geringem Druckverlust.

Bekannt ist weiterhin, dass der Übergang von einem Füllkörper mit geschlossener Oberfläche auf einen Füllkörper, dessen Oberfläche im weitesten Sinne Öffnungen bzw. Durchbrüche aufweist, zu deutlichen Verbesserungen hinsichtlich der Senkung des Druckverlustes über die Füllkörperschüttung führt, bei geeigneter Form ergeben sich dabei keine nennenswerten Leistungsminderungen bezüglich Stoff- bzw. Wärmeaustausch. Allerdings muss bei manchen Ausführungsformen bzw. in manchen Fällen besonders auf eine gute bzw. gleichmäßige Vorverteilung der Medien - in der Regel der Flüssigkeit - durch Auswahl eines geeigneten Flüssigkeitsverteilers - zum Beispiel mit einer geeigneten Anzahl und Verteilung von Tropfstellen - geachtet werden, insbesondere, wenn es sich um größere Kolonnendurchmesser handelt.

In einer regellosen Schüttung werden die Füllkörper und deren meist mit einer gedachten Vorzugsrichtung parallel verlaufenden Füllkörperachsen nach einer technischen Befüllung in der Praxis nahezu regellos nach dem Zufallsprinzip über alle möglichen Ausrichtungen in Bezug zu der Kolonnenachse bzw. Behälterachse verteilt sein, sofern die Füllkörper nicht extrem flach sind und das Nennmaß des betreffenden Füllkörpers entsprechend klein gegenüber dem Kolonnendurchmesser ist. Eine signifikante Bevorzugung der parallelen oder quasi-parallelen Ausrichtung der Füllkörperachse in Bezug zu der Kolonnenachse - welches einer strömungsgünstigen Ausrichtung gegenüber einer regellosen Anordnung entspricht - tritt unter einem praktisch vertretbaren Befüllungsvorgang zumeist nicht in einem ausreichend nennenswertem Umfange auf.

In diesem Zusammenhang ist eine Vielzahl von im weitesten Sinne aus Streifen aufgebauter Füllkörper bekannt. Diese sind beispielsweise beschrieben in DE-PS 853 159, EP 0 143 902 A1, US 4 575 435, DE-AS 1 129 931, US 4 303 599, DE 295 12 080 U1, EP 0 764 462 B1, US 4 041 113, US 4 576 763, US 5 411 681 und EP 0 697 246 B1. In sinnfälliger Weise lässt sich bei diesen bekannten Ausführungsformen im weitesten Sinne eine Füllkörperachse so definieren, wobei diese senkrecht zu den Normalen auf dem bestimmenden Hauptteil der wesentlichen Oberflächenelemente dieser bekannten Füllkörper steht. Diese wesentlichen Oberflächenelemente können gedanklich als Streifen aufgefasst werden, die im Falle von zum Beispiel Metall als Füllkörperwerkstoff aus einem ehemals ebenen rechteckigen Blechstück mit geeigneten Einschnitten durch Umformvorgänge hervorgegangen sind. Die Streifen haben bekanntlich zwei aufeinander senkrecht stehende Seiten und können entlang ihrer einen Seite - zumeist längsseitig - gebogen bzw. verschiedenartig gekrümmt sein, während die andere Seite - also die zur ersteren senkrecht stehende Seite - immer ein gerades Stück ist bzw. ein gerades Stück mit einer kleinen Nut oder mit einer dazu rechtwinkligen Ansatzfläche wie eine Art Flanschstück jeweils zur mechanischen Verstärkung ist.

Ein weiterer Füllkörper ist aus der WO 02/40148 A2 bekannt. Dieser weist eine polygone Gestalt auf und besitzt mehrere gebogene Streifen.

In "Chem Technol Biotechnol 78:142-145 (online:2003), www.paper.edu.cn" ist unter dem Titel "Intensification of random packing via CFD simulation, PIV measurement and traditional experiments" ein Füllkörper beschrieben, mit einem geringen Höhen-Durchmesserverhältnis von 0,2 - 0,3. Durch diesen soll erreicht werden, dass die meisten sogenannten Miniringe sich von alleine unter einem Winkel von weniger als 30˚ zur Horizontalen anordnen, wenn sie in Kolonnen geschüttet werden.

In der DE 197 15 704 C2 ist ein Füllkörper beschrieben, bei dem der Durchmesser des Füllkörpers größer als dessen Höhe ist, wobei das Verhältnis von Höhe zu dem Durchmesser vorzugsweise 1:2 beträgt.

Ein Füllkörper mit den Merkmalen des Oberbegriffs des Patentanspruchs 1 ist beispielsweise aus der US-A-5,130,062 bekannt. Dort wird vorgeschlagen, mehrere Teilfüllkörper zu einer Füllkörpereinheit miteinander zu verbinden. Der jeweilige Teilfüllkörper ist als dünnwandiger Ring mit halbkreisförmigem Querschnitt ausgebildet. Die aus mehreren Teilfüllkörpern gebildete Füllkörpereinheit findet in einer Stoff- und/oder Wärmeaustauschkolonne unterhalb eines oberen Flüssigkeitsverteilers Verwendung, so dass dort eine geregelte Anordnung der Teilfüllkörper gewährleistet ist, mit einer Teilfüllkörperachse etwa parallel zur Längsachse der Kolonne bzw. Behälterachse.

Füllkörper, die eine Füllkörpereinheit darstellen, die durch eine Überstruktur aus mindestens zwei miteinander verbundenen Teilfüllkörpern gebildet ist und ein geringes Höhen-Durchmesserverhältnis aufweisen, sind ferner aus der WO 88/01197 A und WO 98/04343 A bekannt.

Aufgabe der vorliegenden Erfindung ist es, zu einem kostengünstig herstellbaren Füllkörper mit geringem Druckverlust und mit ausreichenden Flüssigkeitsquerverteileigenschaften - jeweils über das ganze Füllkörperbett betrachtet - zu gelangen, indem sich dieser Typ Füllkörper bei einer technischen Kolonnenbefüllung so bevorzugt ausrichtet, dass einerseits ein außergewöhnlich niedriger Druckverlust, und andererseits eine ausreichende Raumerfüllung mit benetzbarer Füllkörperoberfläche resultiert.

Gelöst wird die vorgenannte Aufgabe durch einen Füllkörper, der gemäß den Merkmalen des Patentanspruchs 1 ausgebildet ist.

Die Erfindung schlägt somit einen Füllkörper vor, der durch eine Überstruktur aus mindestens zwei miteinander verbundenen Teilfüllkörpern gebildet ist. Jeder an und für sich beliebig geformte Teilfüllkörper stellt für sich alleine betrachtet bereits einen eigenständigen, vollwertigen Füllkörper mit günstigen Eigenschaften - z. B. einem niedrigen Druckverlust - dar. Durch diese Überstruktur werden zwei oder mehrere Teilfüllkörper fest und in geordneter Weise miteinander verbunden, so dass diese sich in einer Schüttung nicht mehr unabhängig voneinander ausrichten können, der Ordnungsgrad also ansteigt. Obwohl es sich beim erfindungsgemäßen Füllkörper um einen sogenannten Schuttgutfüllkörper handelt, richtet sich der erfindungsgemäße Füllkörper - bestehend aus mindestens zwei Teilfüllkörpern - während der Befüllung durch diese Überstruktur bevorzugt, und zwar strömungsgünstiger als zwei voneinander unabhängige und nicht miteinander verbundene Füllkörper aus. Charakteristisch für den erfindungsgemäßen Füllkörper ist eine versetzte Anordnung der Teilfüllkörper, dergestalt, dass eine längliche bzw. flache Gesamtausführung resultiert.

Hierbei liegt das Verhältnis $\dfrac{H}{\Phi}$ des aus den

Teilkörpern gebildeten Füllkörpers unter 0,6. Zwei der oben genannten Teilfüllkörper können demzufolge z. B. in einer gemeinsamen Ebene angeordnet sein, aber auch in zwei verschiedenen Ebenen, die parallel oder zueinander geneigt sein können. Die einzelnen Streifen können in Richtung ihrer Breite auch V- oder U-förmig über die ganze Länge oder auch nur über einen Teil der Länge geformt sein.

Bevorzugt weicht die tatsächliche Gestalt des erfindungsgemäßen Füllkörpers von einer Kreisform ab, so dass sich der formale Füllkörperdurchmesser $\Phi$ ( d. h. über eine formale Gleichsetzung der größten Stirnfläche $L \cdot B$ eines umhüllenden Quaders mit einer Kreisfläche errechnet sich ein solch formaler Durchmesser) durch die Formel

$$\sqrt{\dfrac{L \cdot B}{\pi}} \cdot 2$$ ergibt, mit L = Länge des Füllkörpers und B = Breite des Füllkörpers. Die bevorzugte Form des Füllkörpers bzw. des jeweiligen Teilfüllkörpers ist in der Aufsicht annähernd rechteckig bzw. annähernd quadratisch.

Bei dem erfindungsgemäßen Füllkörper beträgt das Verhältnis $\dfrac{H}{\Phi}$, vorzugsweise $0{,}05 \leq \dfrac{H}{\Phi} \leq 0{,}19,$

insbesondere $0{,}10 \leq \dfrac{H}{\Phi} \leq 0{,}19.$

Auf besonders einfache Art und Weise lässt sich der Füllkörper, der durch die diversen Teilfüllkörper gebildet ist, aus einer Platte erzeugen. Bevorzugtes Material für den erfindungsgemäßen Füllkörper sind alle Arten von Metall, aber auch Kunststoff und im weitesten Sinne auch Keramik sind möglich, wobei im Falle der Keramik aufgrund der erfindungsgemäßen Füllkörperstruktur ein relativ hoher Herstellungsaufwand und eine gewisse Bruchanfälligkeit vorherrschen.

Die Überstruktur ist durch in symmetrischer oder unsymmetrischer Weise miteinander verbundene identische oder ähnliche Teilfüllkörper gebildet. Vorzugsweise weist der jeweilige Teilfüllkörper eine im Wesentlichen viereckige Querschnittsform auf. Des Weiteren besteht jeder Teilfüllkörper vorzugsweise aus mindestens drei gebogenen Streifen.

Der Füllkörper kann auf unterschiedlichste Art und Weise, bereits betreffend die Streifen, gestaltet sein: So können die Streifen, zumindest in Teilbereichen, bezogen auf deren Querrichtung, zueinander geneigt angeordnet sein. Mindestens ein Streifen kann, bezogen auf dessen Querrichtung, einen profilierten Querschnitt, insbesondere U- oder V-förmigen Querschnitt aufweisen und/oder eine seitliche Ausstanzung aufweisen. Mindestens ein Streifen kann, bezogen auf dessen Längsrichtung, Streifenabschnitte unterschiedlichen Querschnitts aufweisen. Ferner kann mindestens ein Streifen mit mindestens einem Durchgangsloch versehen sein, insbesondere in einem Bereich größeren Querschnitts. Das Durchgangsloch kann überdies von einem Wulst umgeben sein. Dies ist besonders vorteilhaft für eine hohe mechanische Stabilität sowie ein verbessertes Auslaufverhalten bzw. Abtropfen der Flüssigkeit. Die Biegung mindestens eines Streifens kann als Knick ausgebildet sein. Der jeweilige Querschnitt des Streifens kann eben oder gewölbt, insbesondere V-förmig oder U-förmig sein. Es ist ferner denkbar, den Füllkörper so zu gestalten, dass er eine gitterähnliche Struktur aufweist.

Der jeweilige Streifen kann somit auf unterschiedliche Art und Weise gebogen sein. Es kann sich um eine Biegung in Art einer stetigen Krümmung handeln, oder aber um eine Biegung in Art einer Knickung. Auch eine Kombination hiervon ist möglich und durchaus vorteilhaft.

Weitere Merkmale der Erfindung sind in der Beschreibung der Figuren sowie in den Figuren selbst dargestellt, wobei bemerkt wird, dass alle Einzelmerkmale und alle Kombinationen von Einzelmerkmalen erfindungswesentlich sind.

In jeden Figuren ist die Erfindung anhand Ausführungsformen sowie Modifizierungen zu diesen dargestellt, ohne hierauf beschränkt zu sein.

Es stellt dar:

| | |
|---|---|
| Figur 1 | eine Draufsicht einer ersten Ausführungsform des Füllkörpers, wobei diese Ausführungsform nicht Gegenstand der Erfindung ist, |
| Figur 2 | eine Seitenansicht des in Figur 1 gezeigten Füllkörpers, |
| Figur 3 | eine Draufsicht einer zweiten Ausführungsform, die einen erfindungsgemäßen Füllkörper zeigt, |
| Figur 4 | eine Seitenansicht des in Figur 3 gezeigten Füllkörpers, |
| Figur 5 | eine Draufsicht einer dritten Ausführungsform, die einen erfindungsgemäßen Füllkörper zeigt, |
| Figur 6 | eine Seitenansicht des in Figur 5 gezeigten Füllkörpers, |
| Figuren 7 und 8 | eine erste Modifizierung eines beim jeweiligen Teilfüllkörper Verwendung findenden Streifens, in einer Seitenansicht und einer Draufsicht gesehen, |
| Figuren 9 und 10 | eine zweite Modifizierung entsprechend den Figuren 7 und 8, |
| Figuren 11 und 12 | eine dritte Modifizierung entsprechend den Figuren 7 und 8 bzw. 9 und 10. |

Bevorzugt wird der erfindungsgemäße Füllkörper aus einem Band hergestellt, d. h. insbesondere gebogen, so dass zwischen den gebogenen Bandenden des Füllkörpers ein geringer Spalt gebildet ist oder die Bandenden sich berühren.

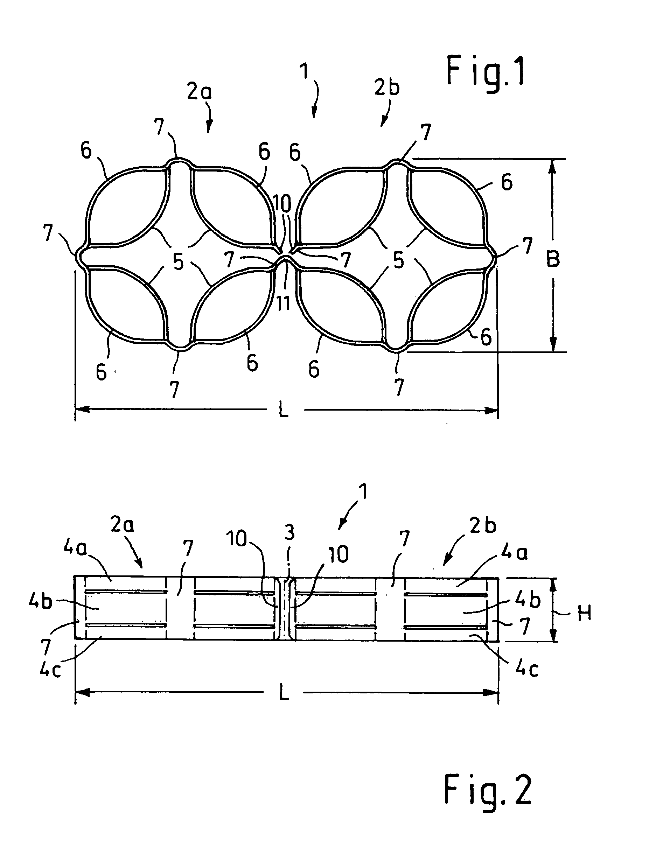

Die in den Figuren 1 und 2 gezeigte erste Ausführungsform ist folgendermaßen charakterisiert:

- flacher Füllkörper 1 aus Metall, konkret einem Metallband, mit den äußeren Abmessungen des umhüllenden Quaders: L = 101 mm, B = 48 mm und H = 15 mm, bei einer Blechstärke von 0,4 mm;
- die abstrakte, tatsächliche Form des Füllkörpers 1 ist eine Überstruktur bestehend aus zwei Teilfüllkörpern 2a, 2b, die als flache Zylinder ausgebildet sind. Diese berühren sich an einer Linie 3 ihrer Zylindermantelfläche, wobei diese Linie 3 parallel der jeweils parallel ausgerichteten Zylinderachsen der Teilfüllkörper 2 ist, der Füllkörper weist im Wesentlichen Rechteckform auf.
- der Füllkörper 1 besteht aus drei Streifen 4a, 4b, 4c, somit weist jeder Teilfüllkörper 2a bzw. 2b diese drei Streifen 4a, 4b, 4c auf, mit einer Abfolge der Streifenbreite von 4,1 mm, 8 mm und 3 mm, so dass insgesamt eine Höhe des jeweiligen Teilfüllkörpers 2a bzw. 2b und auch eine Höhe des Füllkörpers gemäß dieser Ausführungsform von 15,1 mm resultiert. Erzeugt werden die jeweiligen Streifen durch Schlitzen des ebenen Ausgangsmetallbandes mit parallelen Schlitzen, die sich über eine Teillänge des Bandes erstrecken. Jeder Streifen 4a, 4b bzw. 4c ist in der Längsrichtung gebogen (siehe die Beschreibung weiter unten), hingegen in der dazu senkrechten Richtung (Streifenbreite) gerade, d. h. insbesondere nicht gekrümmt und nicht geknickt;
- die benachbarten Streifen 4a, 4b bzw. 4b, 4c sind entgegengesetzt abwechselnd nach vorne bzw. nach hinten bezüglich der ursprünglichen gemeinsamen Ebene herausgebogen,
- der mittlere Streifen 4b ist insgesamt 8mal, und zwar jeweils zu gleichen Längen (30 mm) und in der gleichen Bogenform, in den Füllkörper 1 bzw. den jeweiligen Teilfüllkörper 2a, 2b hineingebogen - wobei die Bogenabschnitte 5 gebildet werden -, so dass zwei diagonal gegenüberliegende Bogenkuppen 18 mm bis 19 mm entfernt auseinander liegen (gemessen in Richtung der Flächennormalen);
- die beiden äußeren Streifen 4a, 4c sind insgesamt 8mal, und zwar jeweils zu gleichen Längen (30 mm) und in der gleichen Bogenform, nach außen gebogen - wobei die Bogenabschnitte 6 gebildet werden - so dass ein Abstand der Bogenkuppen der äußeren Streifen 4a, 4c zu den Bogenkuppen der inneren Streifen 4b von 14,5 mm bis 16 mm resultiert (gemessen in Richtung der Flächennormalen),
- zwischen zwei benachbarten Bögen 5, 5 bzw. 6, 6 verbleibt jeweils ein 5 mm bis 6 mm langer, leicht nach außen gewölbter Bereich 7 (in der Mitte um 1 mm bis 2 mm aus der ursprünglichen bzw. imaginären Ebene herausgewölbt);

- bei der ersten Ausführungsform sind somit die Blechabschnitte, von der Mitte des Ausgangsbleches aus, jeweils in Zylinderform gebogen, so dass die freien Enden 10 der Blechabschnitte am Mittelabschnitt 11 des Blechbandes anliegen.

Diese Ausführungsform nach den Figuren 1 und 2 zeichnet sich durch einen außergewöhnlich niedrigen Druckverlust aus. Insofern wird auf die nachstehende Tabelle 1 Bezug genommen, bei der die Messwerte dieser Ausführung des Füllkörpers mit anderen Füllkörpern verglichen sind:

**Tabelle-1: Vergleich von Messwerten einer Ausführung des Füllkörpers gegenüber anderen Füllkörpern (Material: jeweils Metall ; dp/H: spezifischer Druckverlust; Fv: uL: Berieselungsdichte; Messungen: System Luft/Wasser, 20˚C, 1013 mbar abs.)**

| Füllkörper aus Metall: Bezeichnung/Patent/ Bemerkungen Bemerkungen | Spezifische Oberfläche [m2/m3] | dp/H [Pa/m] $(Fv{=}1\cdot\sqrt{Pa}$; uL=10 m/h) (niedrige Belastung) | dp/H [Pa/m] ( $Fv{=}2\cdot\sqrt{Pa}$; uL=20m/h) (mittlere Belastung) | dp/H [Pa/m] ( $Fv{=}3{,}2\cdot\sqrt{Pa}$; uL-40m/h) (hohe Belastung) | Einfachste geometrische umhüllende Körperform | L [mm] / B [mm] / H[mm] | $\dfrac{H}{\Phi}$ |
|---|---|---|---|---|---|---|---|
| Ausführungsform-1 des Füllkörpers, siehe Text | 95 | 22 | 93 | 323 | Quaders, L≠B≠H | 101 / 48 / 15 | 0,19 |
| Ausführung gemäß EP 0 764 462 B1 | 95 | 28 | 119 | 453 | Quader, L≠B≠H | 55 / 49 / 38 | 0,65 |
| Modifizierte Ausführung gemäß EP 0 143 902 $(\dfrac{L\cdot B}{H\cdot H}=\dfrac{10....11}{1})$ | 100 | 30 | 129 | 918 | Quader, L≈B≠H | 50 / 49 / 15 | 0,27 |
| Ausführung gemäß US 4 303 599 | 95 | 37 | 159 | 652 | Quader, L≠B≠H | 59 / 45 / 31 | 0,53 |
| Modifizierte Ausführung gemäß EP 0 143 902 $(\dfrac{L\cdot B}{H\cdot H}=\dfrac{3,5....4}{1})$ | 95 | 42 | 187 | 1519 | Quader, L≈B≠H | 50 / 48 / 25 | 0,45 |
| Ausführung gemäß EP 0 143 902 | 100 | 47 | 208 | 1708 | Quader, L≈B≈H | 50 / 48 / | 0,90 |

(fortgesetzt)

| Füllkörper aus Metall: Bezeichnung/Patent/ Bemerkungen Bemerkungen | Spezifiche Oberfläche [m2/m3] | dp/H [Pa/m] ($Fv=1 \cdot \sqrt{Pa}$; uL=10 m/h) (niedrige Belastung) | dp/H [Pa/m] ( $Fv=2 \cdot \sqrt{Pa}$; uL=20m/h) (mittlere Belastung) | dp/H [Pa/m] ( $Fv=3,2 \cdot \sqrt{Pa}$; uL-40m/h) (hohe Belastung) | Einfachste geometrische umhüllende Körperform | L [mm] / B [mm] / H[mm] | $\dfrac{H}{\Phi}$ |
|---|---|---|---|---|---|---|---|
| ( $\dfrac{L \cdot B}{H \cdot H} = \dfrac{0,9....1}{1}$ ) | | | | | | 50 | |
| Pall-Ring | 95 | 55 | 253 | > 2000 | Quader, L≈B≈H | 50 / 52 / 50 | 0,87 |

L, B, H: aufeinander senkrecht stehende Seitenlängen des Quaders

$L$ = Länge, $B$ = Breite, $H$ = Höhe **Einfachste geometrische umhüllende Körperform** = Einfachste geometrische Körperform, in die der Füllkörper hineingesteckt werden kann

$\Phi$ = formaler Füllkörperdurchmesser ( $\sqrt{\dfrac{L \cdot B}{\pi}} \cdot 2$ )

EP 1 731 221 B1

Im Sinne der Erfindung gibt es eine Vielzahl von unterschiedlichen Ausgestaltungsmöglichkeiten, von denen einige einfacher und andere mit einem höheren Aufwand, d. h. mit mehr Einzelschritten während des Umformprozesses, insbesondere wenn Metall als Werkstoff gewählt wird, herstellbar sind, weswegen im Folgenden die einfachen Ausgestaltungsmöglichkeiten beispielhaft anhand der Ausführungsformen 2 und 3 dargestellt werden. Daraus ist erkennbar, dass auch andere Teilfüllkörperformen so kombiniert werden können, dass ein neuer, bisher nicht bekannter Füllkörper im Sinne der Erfindung resultiert, selbst wenn der bzw. einer der Teilfüllkörper einem bereits bekannten Füllkörper ähnelt.

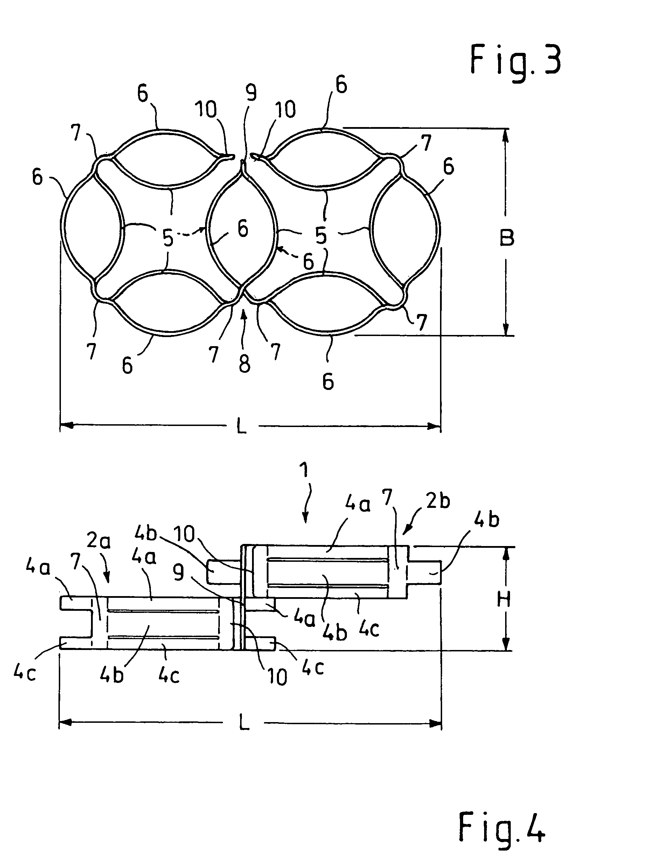

Die Figuren 3 und 4 veranschaulichen eine Abwandlung der ersten Ausführungsform gemäß der Figuren 1 und 2, die die beiden nebeneinander angeordneten Teilfüllkörper 2a und 2b veranschaulicht. Bei der zweiten Ausführungsform hingegen liegen beide Teilfüllkörper 2a, 2b in zwei verschiedenen Ebenen, wobei sie sich im Bereich 8 überlappen. Jeder Teilfüllkörper 2a bzw. 2b weist die zur ersten Ausführungsform beschriebenen Streifen 4a, 4b, 4c auf. Ausgehend von einem gemeinsamen Ende 9 der beiden Teilfüllkörper 2a, 2b, die mit den Bogenabschnitten 5 und 6 versehen sind, sind die beiden vom Ende 9 ausgehenden Blechabschnitte zur Bildung der Teilfüllkörper 2a, 2b entgegengesetzt gerichtet gebogen und kontaktieren mit den jeweiligen Enden 10 das Ende 9.

Die Abmessungen des Füllkörpers 1 der zweiten Ausführungsform betragen, entsprechend dem zur ersten Ausführungsform definierten umhüllenden Quader: L = 91 mm, B = 51 mm, H = 25 mm, bei einer Blechstärke des Streifens von 0,4 mm.

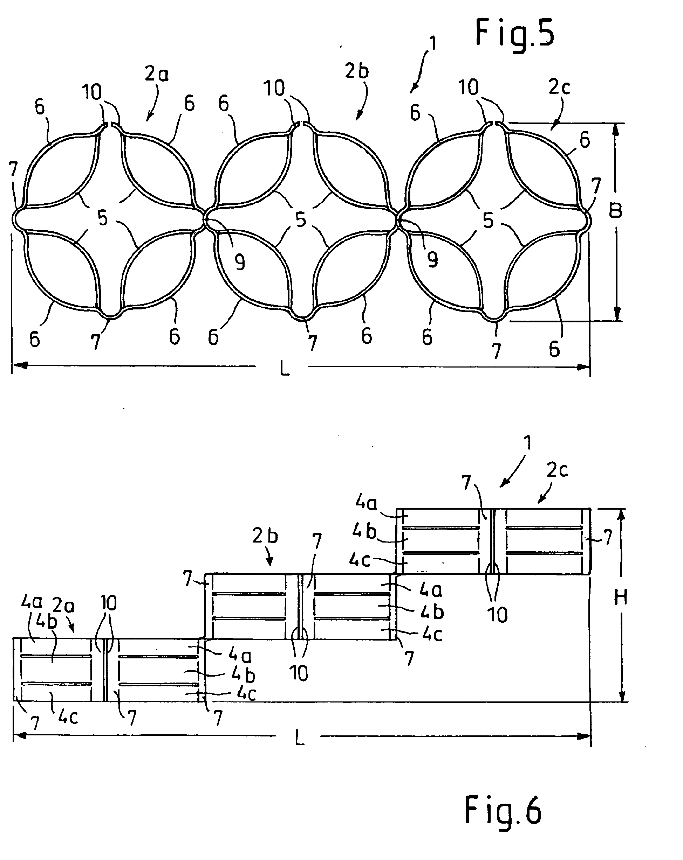

Bei der dritten Ausführungsform gemäß der Figuren 5 und 6 ist der Füllkörper 1 durch in drei Ebenen angeordnete Teilfüllkörper 2a, 2b, 2c gebildet. Die äußeren Abmessungen dieses Füllkörpers 1 betragen, bezogen auf den beschriebenen umhüllenden Quader: L = 145 mm, B = 51 mm, H = 50 mm, wiederum bei einer Blechstärke des Streifens von 0,4 mm.

Bei dieser dritten Ausführungsform sind die drei Teilfüllkörper 2a, 2b, 2c jeweils nebeneinander angeordnet. Der jeweilige Teilfüllkörper 2a, 2b bzw. 2c ist identisch den Teilfüllkörpern 2a bzw. 2b der zweiten Ausführungsform ausgebildet, allerdings mit dem Unterschied, dass benachbarte Teilfüllkörper nicht, wie bei der zweiten Ausführungsform, im Bereich der zugewandten Ecken der Teilfüllkörper durch Überlappen und benachbart des Eckbereichs miteinander verbunden sind, sondern keine oder nur eine mäßige Überlappung stattfindet und die Verbindung benachbarter Teilfüllkörper im Bereich der halben Länge des umhüllenden Quaders der jeweiligen Seite des Teilfüllkörpers erfolgt. Mit der Ausführungsform gemäß der Figuren 3 und 4 überstimmende Teile der Ausführungsform gemäß der Figuren 5 und 6 sind der Einfachheit halber mit denselben Bezugsziffern bezeichnet.

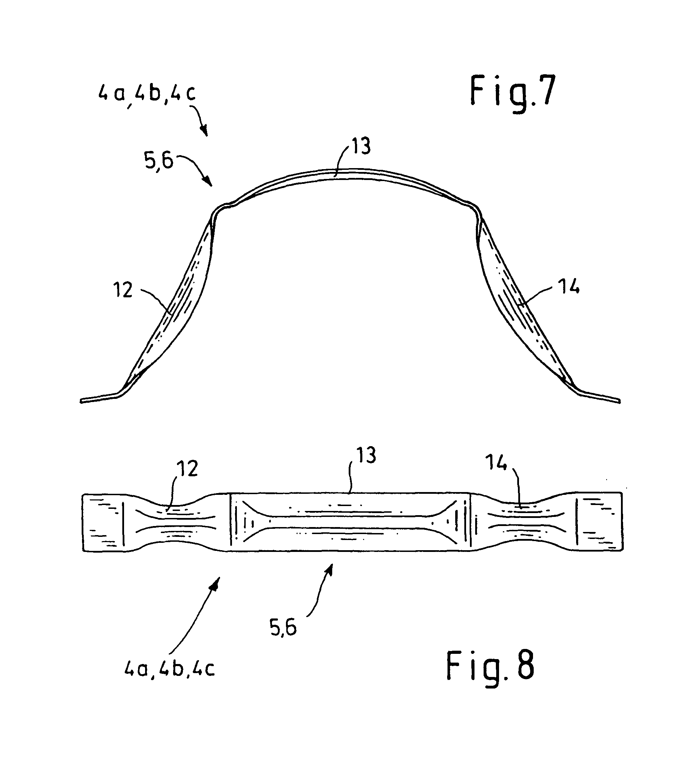

Die Figuren 7 bis 12 zeigen drei modifizierte Gestaltungen, beispielsweise eines der Streifen 4a, 4b, 4c des Füllkörpers 1, wobei selbstverständlich auch mehr als ein Streifen entsprechend modifiziert sein kann oder aber auch unterschiedliche der nachstehend beschriebenen Streifengestaltungen miteinander kombiniert werden können:

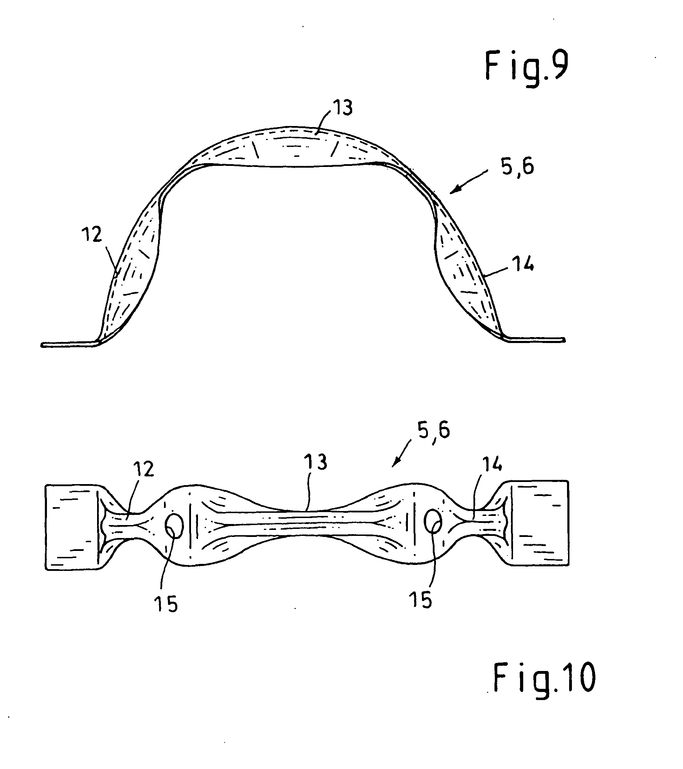

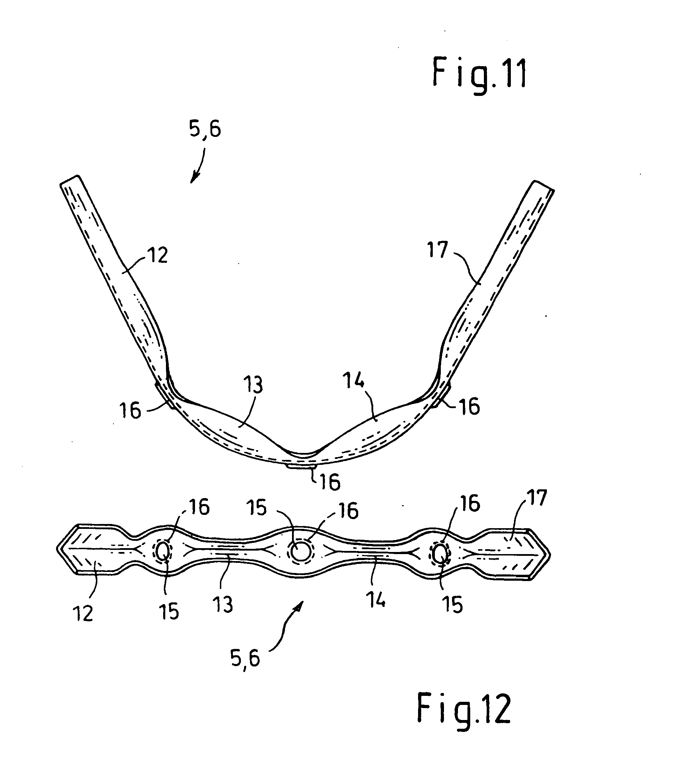

Die erste Modifizierung gemäß der Figuren 7 und 8, die einen Bogenabschnitt 5 bzw. 6 des Teilfüllkörpers 2a, 2b, 2c zeigt, veranschaulicht, dass der jeweilige Streifen 4a, 4b bzw. 4c, bezogen auf dessen Längsrichtung, Streifenabschnitte 12, 13, 14 unterschiedlichen Querschnitts aufweist. Der Streifen ist zur Bildung der Streifenabschnitte geknickt. Die Streifenabschnitte weisen unterschiedlichen Querschnitt auf. Bei der Modifizierung nach den Figuren 7 und 8 ist der Querschnitte der Streifenabschnitte 12 und 14 V-förmig und der des Streifenabschnitts 13 als wesentlich flacheres V ausgebildet. Bei der Modifizierung nach den Figuren 9 und 10 sind die Streifenabschnitte 12, 13 und 14 sehr stark verjüngt und weisen im Querschnitt U-Form auf. Die taillierten Bereiche der Streifenabschnitte 12, 13 und 14 bei dieser Modifizierung könnten durchaus auch durch eine seitliche Ausstanzung erzeugt werden. Im Verbindungsbereich der Streifenabschnitte 12 und 13 bzw. 13 und 14 gemäß der Modifizierung nach den Figuren 9 und 10 sind Durchgangslöcher 15 im Streifen vorgesehen, demzufolge im Bereich des größeren Querschnitts des Streifens. Bei der Modifizierung gemäß der Figuren 11 und 12 mit vier Streifenabschnitten 12, 13, 14, 17, wobei die Streifenabschnitte 12 und 17 V-förmigen Querschnitt und die Streifenabschnitte 13 und 14 U-förmigen Querschnitt besitzen, sind im Bereich des Übergangs der Streifenabschnitte nicht nur die beschriebenen Durchgangslöcher 15 vorgesehen, sondern es sind diese Durchgangslöcher 15 zusätzlich mit einem Wulst 16 versehen. Eine weitere Modifizierung, die allerdings nicht veranschaulicht ist, kann darin bestehen, die jeweiligen Streifen 4a, 4b, 4c, bezogen auf deren ausgebogene Ebene nicht parallel zueinander anzuordnen, sondern zueinander geneigt zu positionieren. Hierdurch ergibt sich zwischen benachbarten Streifen ein größerer oder kleinerer Spalt, je nachdem in welcher Richtung die Streifen gebogen sind - aufeinander zu oder voneinander weg -.

## Patentansprüche

1. Füllkörper (1), insbesondere für Stoff- und/oder Wärmeaustauschkolonnen, die von einer Gas- und/oder Flüssigkeitsströmung durchsetzt werden, wobei der Füllkörper (1) mindestens zwei gebogene Streifen (4a, 4b, 4c) aufweist, sowie der Füllkörper (1) eine Füllkörpereinheit ist, die durch eine Überstruktur aus mindestens zwei miteinander verbundenen Teilfüllkörpern (2a, 2b, 2c) gebildet ist, wobei jeder Teilfüllkörper (2a, 2b, 2c), für sich alleine betrachtet, bereits einen eigenständigen, technisch einsetzbaren Füllkörper darstellt, wobei das Verhältnis $\dfrac{H}{\Phi}$ des durch die

Teilfüllkörper (2a, 2b, 2c) gebildeten Füllkörpers (1) < 0,6 beträgt, mit
H = Höhe des Füllkörpers (1)

$$\Phi = \sqrt{\dfrac{L \cdot B}{\pi}} \cdot 2$$

mit
L = Länge des Füllkörpers (1)
B = Breite des Füllkörpers (1)
**dadurch gekennzeichnet, dass** die Teilfüllkörper (2a, 2b, 2c) auf unterschiedlichem Niveau angeordnet sind.

2. Füllkörper nach Anspruch 1, **dadurch gekennzeichnet, dass** das Verhältnis $\dfrac{H}{\Phi}$ des Füllkörpers (1) vorzugsweise

$0,05 \leq \dfrac{H}{\Phi} \leq 0,19$, insbesondere $0,10 \leq \dfrac{H}{\Phi} \leq 0,19$ ist.

3. Füllkörper nach Anspruch 1 oder 2, **dadurch gekennzeichnet, dass** der Füllkörper (1) aus einer Platte erzeugt ist.

4. Füllkörper nach einem der Ansprüche 1 bis 3, **dadurch gekennzeichnet, dass** die Überstruktur durch in symmetrischer oder unsymmetrischer Weise miteinander verbundene, identische oder ähnliche Teilfüllkörper (2a, 2b, 2c) gebildet ist.

5. Füllkörper nach einem der Ansprüche 1 bis 4, **dadurch gekennzeichnet, dass** die Teilfüllkörper (2a, 2b, 2c) nebeneinander oder überlappend angeordnet sind.

6. Füllkörper nach einem der Ansprüche 1 bis 5, **dadurch gekennzeichnet, dass** der jeweilige Teilfüllkörper (2a, 2b, 2c) eine im Wesentlichen viereckige Querschnittsform aufweist.

7. Füllkörper nach einem der Ansprüche 1 bis 6, **dadurch gekennzeichnet, dass** der jeweilige Teilfüllkörper (2a, 2b, 2c) aus mindestens drei gebogenen Streifen (4a, 4b, 4c) besteht.

8. Füllkörper nach einem der Ansprüche 1 bis 7, **dadurch gekennzeichnet, dass** er aus Metall oder Kunststoff oder Keramik besteht.

9. Füllkörper nach einem der Ansprüche 1 bis 8, **dadurch gekennzeichnet, dass** die Streifen (4a, 4b, 4c) zumindest in Teilbereichen (5, 6), bezogen auf deren Querrichtung, zueinander geneigt angeordnet sind.

10. Füllkörper nach einem der Ansprüche 1 bis 9, **dadurch gekennzeichnet, dass** mindestens ein Streifen (4a, 4b, 4c), bezogen auf dessen Querrichtung, einen profilierten Querschnitt, insbesondere U- oder V-förmigen Querschnitt aufweist, und/oder eine seitliche Ausstanzung aufweist.

11. Füllkörper nach einem der Ansprüche 1 bis 10, **dadurch gekennzeichnet, dass** mindestens ein Streifen (4a, 4b, 4c), bezogen auf dessen Längsrichtung, Streifenabschnitte (12, 13, 14) unterschiedlichen Querschnitts aufweist.

12. Füllkörper nach einem der Ansprüche 1 bis 11, **dadurch gekennzeichnet, dass** mindestens ein Streifen (4a, 4b, 4c) mit mindestens einem Durchgangsloch (15) versehen ist, insbesondere in einem Bereich größeren Querschnitts.

13. Füllkörper nach Anspruch 12, **dadurch gekennzeichnet, dass** das Durchgangsloch (15) mit einem Wulst (16) versehen ist.

14. Füllkörper nach einem der Ansprüche 1 bis 13, **dadurch gekennzeichnet, dass** die Biegung des mindestens einen Streifens (4a, 4b, 4c) als Knick ausgebildet ist.

**15.** Füllkörper nach einem der Ansprüche 1 bis 14, **dadurch gekennzeichnet, dass** der jeweilige Querschnitt eben oder gewölbt, insbesondere V-förmig oder U-förmig ist.

**16.** Füllkörper nach einem der Ansprüche 1 bis 15, **dadurch gekennzeichnet, dass** er eine gitterähnliche Struktur aufweist.

**Claims**

**1.** Packing in particular for mass transfer and/or heat-exchange columns, through which a gas and/or liquid flow passes, the packing (1) having at least two bent strips (4a, 4b, 4c), and the packing (1) being a packing unit which is formed by an overstructure of at least two partial packings (2a, 2b, 2c) connected to one another, each partial packing (2a, 2b, 2c) already in itself constituting an independent packing capable of being used industrially, the ratio $\dfrac{H}{\Phi}$ of the packing (1) formed by the partial packings (2a, 2b, 2c) being < 0.6, with
H = height of the packing (1)

$$\Phi = \sqrt{\frac{L \cdot B}{\pi}} \cdot 2$$

with
L = length of the packing (1)
B = width of the packing (1),
**characterized in that** the partial packings (2a, 2b, 2c) are arranged at a different level.

**2.** Packing according to Claim 1, **characterized in that** the ratio $\dfrac{H}{\Phi}$ of the packing (1) is preferably

$$0.05 \leq \frac{H}{\Phi} \leq 0.19, \text{ in particular } 0.10 \leq \frac{H}{\Phi} \leq 0.19.$$

**3.** Packing according to Claim 1 or 2, **characterized in that** the packing (1) is produced from a plate.

**4.** Packing according to one of Claims 1 to 3, **characterized in that** the overstructure is formed by identical or similar partial packings (2a, 2b, 2c) connected to one another symmetrically or asymmetrically.

**5.** Packing according to one of Claims 1 to 4, **characterized in that** the partial packings (2a, 2b, 2c) are arranged next to one another or overlapping.

**6.** Packing according to one of Claims 1 to 5, **characterized in that** the respective partial packing (2a, 2b, 2c) has an essentially quadrangular cross-sectional shape.

**7.** Packing according to one of Claims 1 to 6, **characterized in that** the respective partial packing (2a, 2b, 2c) consists of at least three bent strips (4a, 4b, 4c).

**8.** Packing according to one of Claims 1 to 7, **characterized in that** it consists of metal or plastic or ceramic.

**9.** Packing according to one of Claims 1 to 8, **characterized in that** the strips (4a, 4b, 4c), at least in partial areas (5, 6), are arranged inclined to one another with respect to their transverse direction.

**10.** Packing according to one of Claims 1 to 9, **characterized in that** at least one strip (4a, 4b, 4c) has with respect to its transverse direction a profiled cross section, in particular U-shaped or V-shaped cross section, and/or has a lateral cut-out portion.

11. Packing according to one of Claims 1 to 10, **characterized in that** at least one strip (4a, 4b, 4c) has strip segments (12, 13, 14) of different cross section with respect to its longitudinal direction.

12. Packing according to one of Claims 1 to 11, **characterized in that** at least one strip (4a, 4b, 4c) is provided with at least one through-hole (15), in particular in a region of larger cross section.

13. Packing according to Claim 12, **characterized in that** the through-hole (15) is provided with a bead (16).

14. Packing according to one of Claims 1 to 13, **characterized in that** the bend of the at least one strip (4a, 4b, 4c) is in the form of a kink.

15. Packing according to one of Claims 1 to 14, **characterized in that** the respective cross section is plane or curved, in particular V-shaped or U-shaped.

16. Packing according to one of Claims 1 to 15, **characterized in that** it has a lattice-like structure.


**Revendications**

1. Elément de garnissage (1), en particulier pour des colonnes d'échange de matière et/ou de chaleur qui sont traversées par un écoulement de gaz et/ou de liquide, l'élément de garnissage (1) présentant au moins deux rubans cintrés (4a, 4b, 4c) l'élément de garnissage (1) étant une unité d'élément de garnissage formée par une superstructure constituée d'au moins deux éléments partiels de garnissage (2a, 2b, 2c) reliés l'un à l'autre, chaque élément partiel de garnissage (2a, 2b, 2c) constituant déjà, pris en soi, un élément de garnissage autonome qui peut être utilisé techniquement, le rapport H/φ de l'élément de garnissage (1) formé des éléments partiels de garnissage (2a, 2b, 2c) étant < 0,6, avec
H = hauteur de l'élément de garnissage (1)

$$\Phi = \sqrt{\frac{L \cdot B}{\pi}} \cdot 2$$

et
L = longueur de l'élément de garnissage (1)
B = Largeur de l'élément de garnissage (1),
**caractérisé en ce que**
les éléments partiels de garnissage (2a, 2b, 2c) sont disposés à des niveaux différents.

2. Elément de garnissage selon la revendication 1, **caractérisé en ce que** le rapport H/φ de l'élément de garnissage (1) est de préférence $0,05 \leq H/\phi \leq 0,19$ et en particulier $0,10 \leq H/\phi \leq 0,19$.

3. Elément de garnissage selon les revendications 1 ou 2, **caractérisé en ce que** l'élément de garnissage (1) est formé à partir d'une plaque.

4. Elément de garnissage selon l'une des revendications 1 à 3, **caractérisé en ce que** la superstructure est formée d'éléments partiels de garnissage (2a, 2b, 2c) identiques ou similaires et reliés les uns aux autres de manière symétrique ou asymétrique.

5. Elément de garnissage selon l'une des revendications 1 à 4, **caractérisé en ce que** les éléments partiels de garnissage (2a, 2b, 2c) sont disposés les uns à côté des autres ou sont superposés.

6. Elément de garnissage selon l'une des revendications 1 à 5, **caractérisé en ce que** chaque élément partiel de garnissage (2a, 2b, 2c) a en section transversale une forme essentiellement rectangulaire.

7. Elément de garnissage selon l'une des revendications 1 à 6, **caractérisé en ce que** chaque élément partiel de garnissage (2a, 2b, 2c) est constitué d'au moins trois rubans cintrés (4a, 4b, 4c).

8. Elément de garnissage selon l'une des revendications 1 à 7, **caractérisé en ce qu'**il est constitué de métal, de matière synthétique ou de céramique.

9. Elément de garnissage selon l'une des revendications 1 à 8, **caractérisé en ce que** les rubans (4a, 4b, 4c) sont au moins dans certaines parties (5, 6) inclinés les uns par rapport aux autres dans leur direction transversale.

10. Elément de garnissage selon l'une des revendications 1 à 9, **caractérisé en ce qu'**au moins un ruban (4a, 4b, 4c) présente en direction transversale une section transversale profilée et en particulier une section transversale en forme de U ou de V, et/ou est estampé latéralement.

11. Elément de garnissage selon l'une des revendications 1 à 10, **caractérisé en ce qu'**au moins un ruban (4a, 4b, 4c) présente dans sa direction longitudinale des tronçons de ruban (12, 13, 14) de sections transversales différentes.

12. Elément de garnissage selon l'une des revendications 1 à 11, **caractérisé en ce qu'**au moins un ruban (4a, 4b, 4c) est doté d'au moins un trou de passage (15), en particulier dans une partie de plus grande section transversale.

13. Elément de garnissage selon la revendication 12, **caractérisé en ce que** le trou de passage (15) est doté d'un bourrelet (16).

14. Elément de garnissage selon l'une des revendications 1 à 13, **caractérisé en ce que** la flexion d'au moins un ruban (4a, 4b, 4c) a la forme d'un coude.

15. Elément de garnissage selon l'une des revendications 1 à 14, **caractérisé en ce que** sa section transversale est plane ou cintrée, en particulier en forme de V ou en forme de U.

16. Elément de garnissage selon l'une des revendications 1 à 15, **caractérisé en ce qu'**il présente une structure de type en grille.

Fig.1

Fig.2

Fig.3

Fig.4

Fig.5

Fig.6

Fig.7

4a,4b,4c

5,6

13

12

14

Fig.8

12

13

14

5,6

4a,4b,4c

Fig.9

13

5,6

12

14

5,6

12    13    14

15    15

Fig.10

Fig.11

Fig.12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE PS853159 C
- EP 0143902 A1
- US 4575435 A
- DE AS1129931 B
- US 4303599 A
- DE 29512080 U1
- EP 0764462 B1
- US 4041113 A
- US 4576763 A
- US 5411681 A
- EP 0697246 B1
- WO 0240148 A2
- DE 19715704 C2
- US 5130062 A
- WO 8801197 A
- WO 9804343 A

### In der Beschreibung aufgeführte Nicht-Patentliteratur

- *Chem Technol Biotechnol,* 2003, vol. 78, 142-145, www.paper.edu.cn